# EUROPEAN PATENT SPECIFICATION

(11) **EP 3 734 086 B1**
(45) Date of publication and mention of the grant of the patent: **02.03.2022**
(21) Application number: 19172594.4
(22) Date of filing: 03.05.2019
(51) Int. Cl.: F16B 5/04, F16B 19/10, F16B 37/06

(54) **BLIND RIVET NUT, BLIND RIVET NUT ARRANGEMENT AND SETTING METHOD**
BLINDNIETMUTTER, BLINDNIETMUTTERANORDNUNG UND SETZVERFAHREN
ÉCROU À RIVET AVEUGLE, AGENCEMENT D'ÉCROU À RIVET AVEUGLE ET PROCÉDÉ D'INSTALLATION

(43) Date of publication of application: 04.11.2020
(73) Proprietor: Newfrey LLC, New Britain, CT 06053 (US)
(72) Inventor: Neul, Thorsten, 35394 Gießen (DE); Schneider, Stefan, 35394 Gießen (DE)
(74) Representative: SBD IPAdmin

(56) References cited:
- EP-A1- 2 947 336
- CN-U- 203 322 012
- US-A1- 2004 192 452

## Description

The present invention relates to a blind rivet nut, a blind rivet nut arrangement and a setting method. More particularly, the present invention relates to a blind rivet nut allowing an automated setting without a perfect alignment between the axis of the blind rivet nut and the axis of the hole in which the blind rivet nut is destined to be arranged.

Blind rivet nuts are used in thin sheet applications as a means of thread reinforcement. A blind rivet nut typically has an elongate body, that is generally cylindrical or hexagonal in cross section, and hollow for the major part of its length, with one end being either closed (blind) or open. Part of the hollow portion is threaded to receive a setting tool or bolt. A flange is formed at an open end of the blind rivet nut remote from the threaded end and extends laterally therefrom. The flange extends beyond the periphery of the hollow body and has a generally flat face that abuts the surface of an outer layer or sheet of material.

Installation of the blind rivet nut commences with the blind rivet nut being threaded onto a threaded mandrel of a setting tool and together inserting the blind rivet through preformed apertures of one or more layers of sheets of materials. On initiation of the setting cycle the setting tool mandrel, still in engagement in the blind rivet nut, is pulled rearwards towards the flange of the blind rivet nut thereby causing deformation of the blind rivet nut body walls beyond the side of the workpiece remote from the operator and sandwiching the, or each sheet of material, against the face of the flange.

Several patent documents disclose such kind of blind rivet nuts. The European patent EP1953398 B1 for instance is directed to a blind rivet nut comprising a shank and a head with at least two different bore segments in the inside of the blind rivet nut. A tapered end of the blind rivet nut is provided and allow a better insertion into an aperture.

US10012257 BB discloses a component arrangement with a blind rivet nut.

The blind rivet nut is also provided with a chamfer at its foot end.

Another blind rivet nut is known from US 2004/192452 A1.

Such blind rivets and blind rivet arrangements are adapted to provide a better insertion into an aperture. However, there is still a need to improve such blind rivet nuts and their insertions.

For instance, to ensure a perfect assembly and notably an anti-rotation of the assembled blind rivet nut, the diameter of the hole and the diameter of the blind rivet nut body are dependent from each other with a close tolerance. However, the close tolerance between the diameter of the hole and the diameter of the blind rivet nut body might be difficult to ensure in an industrial environment.

Besides, the insertion of the blind rivet nut into the hole is usually facilitated by providing a chamfer at the end of the blind rivet nut body as disclosed in the prior art mentioned. However, the presence of the chamfer alone might not be sufficient for some automated or fully-automated setting of blind rivet nuts.

The object of the present invention is to go some way towards solving or at least mitigating the problem above and providing a blind rivet nut with improved setting capability, such that for instance a fully-automated setting can easily be made. The object of the present invention is further to provide a blind rivet nut arrangement and a blind rivet nut setting method which allows a pre-determined and defined maximal offset between the center of the hole and the axis of the rivet, thus facilitating the insertion without decreasing the joining or assembly quality.

To this aim, according to the invention, it is provided a blind rivet nut according to claim 1.

Such blind rivet nut is easy to manufacture and can easily be mounted in the hole of a workpiece, even if the axis of the hole and the nut are not entirely centered. Besides, several tests have surprisingly shown that such blind rivet nuts can easily be set fully-automated by a blind rivet nut setting robot. Indeed, the specific ratio of the blind rivet nut between two diameters of the blind rivet nut associated with the specific chamfer angle perfectly allows an automation of the setting process, reducing manufacturing time.

In some embodiment the ratio of the foot end diameter to the external wall diameter is between 0.74 and 0.81. Such ratio is particularly advantageous, since it provides a well-balanced rivet which can easily be set.

In some embodiment the foot end angle is of about 23 degrees. Due to the foot end angle of about 23 degrees the blind rivet nut can better slide into the aperture

In some embodiment a first internal chamfer is provided between the first and the second bore segment. The first internal chamfer makes an angle of 60 degrees with the longitudinal axis. The first internal chamfer assists the attachment and the centering of a threaded mandrel attached to a setting machine.

In some embodiment a second internal chamfer is provided between the two bore segments of the bore. This second internal chamfer assists the centering and the engaging of the threaded mandrel of the blind rivet setting device with an internal thread of the blind rivet nut.

In some embodiment the blind rivet nut is made of a material chosen from for example steel, brass, stainless steel or aluminum. The material could also be chosen from alloys of the aforesaid materials. The material of the blind rivet nut could therefore be chosen in function of the materials destined to be connected by the blind rivet nut or in which the blind rivet nut will be inserted in.

In some embodiment the shank has an outer surface in the form of a regular polygonal prism or of a cylinder. The regular polygonal form of the shank increases the resistance against a rotation of the assembled blind rivet nut in an aperture of one or more layers of material. The cylindrical form is easy to manufacture.

The present invention is further directed to a blind rivet nut arrangement according to independent claim 8. Such arrangement is easy to set up.

In some embodiment the aperture is provided with a contour having ten to fourteen protrusions. This geometry of the aperture additionally supports the equalization of a possibly occurring offset. For instance, the aperture is provided with twelve protrusions.

Finally, the present invention is directed to a blind rivet nut setting method according to claim 10.

The method allows the setting of a blind rivet nut with an offset up to 1.5 mm. The assembly can thus be completely automated, and the manufacturing time is reduced. Indeed, several tests have proven that such offset allows a full automation without a further particular hole-finding device, for instance attached to the head of a setting machine. Besides, such offset allows a time-efficient setting.

In some embodiment a straightening step is performed after the insertion of the shank into the aperture. The straightening step ensures that the head of the blind rivet nut (the flange) and a surface of the workpiece are mostly parallel to each other.

In some embodiment the workpiece is provided with the aperture. The aperture is provided with a contour having ten to fourteen protrusions. For instance, the aperture is provided with twelve protrusions. With the contour with 12 protrusions a cladding circle will become bigger than a cladding circle of for example a normally used hex hole. So, this geometry of the aperture additionally supports the equalization of a possibly occurring offset.

Other advantages and characteristics will readily appear from the following description of embodiments, provided as non-limitative examples, in reference to the accompanying drawings.

In the drawings:
- Fig. 1: is a side view of the inventive blind rivet nut;
- Fig. 2: shows the blind rivet nut of Fig. 1 in sectional view A - A;
- Fig. 3: is a sectional view of the blind rivet nut and a sheet material before assembly;
- Fig. 4: is a top view of a contour of an aperture in the sheet material;
- Fig. 5: is a sectional view of a blind rivet nut in the inserted state;
- Fig. 6: is a schematic flow chart of the inventive blind rivet nut setting method.

On the different figures, the same reference signs designate identical or similar elements.

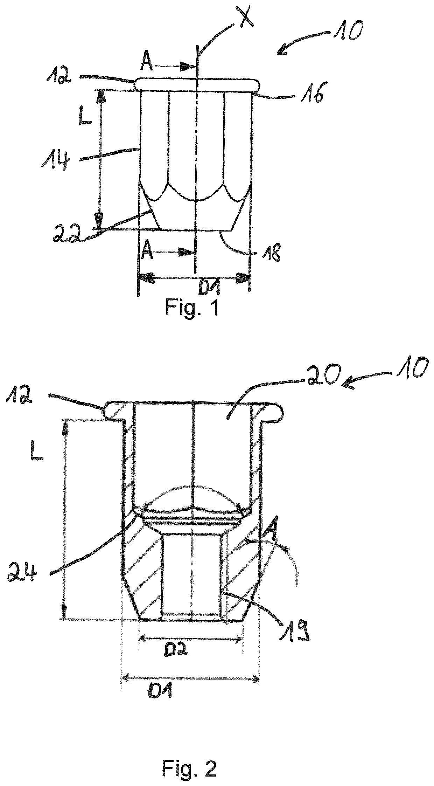

Fig. 1 shows a side view of a blind rivet nut 10. The blind rivet nut 10 comprises a head 12 forming a flange and a shank 14. The shank 14 extends along a longitudinal axis X. For example, the shank 14 of the blind rivet nut 10 may have for example a length L of about 19 mm and an external wall diameter D1 of about 13,5 mm. In another embodiment the blind rivet nut 10 could have a length L of the shank 14 of about 16,5 mm and an external wall diameter D1 of about 11,5 mm. In a further embodiment the external wall diameter D1 of the blind rivet nut 10 may be of about 15,5 mm and the length L of the shank 14 may be of about 22,75 mm. The blind rivet nut 10 may also have an external wall diameter D1 of about 9 mm and a length L of the shank 14 of about 14 mm.

The blind rivet nut 10 is for instance centered about the longitudinal axis X. The shank 14 comprises a head end 16 and a foot end 18. The head end is arranged proximal to and in the continuity of the head 12, wherein the foot end 18 forms a free end. The foot end 18 comprises a foot end angle A with the longitudinal axis X of the blind rivet nut 10. The foot end angle is a non-zero angle (A > 0°). The foot end angle A is realized by a tapered chamfer 22 at the food end 18 of the shank 14. Further the shank 14 has an outer surface in the form of a regular polygonal prism or of a cylinder. The regular polygonal form of the shank 14 increases the resistance against a rotation of the assembled blind rivet nut 10 in an aperture of a sheet material.

The blind rivet nut 10 is made of a material chosen from for example steel, brass, stainless steel or aluminum. The material could also be chosen from alloys of the aforesaid materials.

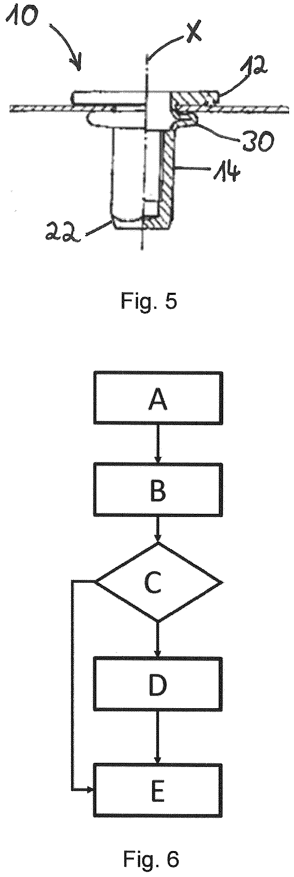

Fig. 2 shows the blind rivet nut 10 depicted in Fig. 1 in sectional view A - A. The shank 14 comprises a cylindrical bore 20 which extends along the longitudinal axis X from the head end 16 to the foot end 18. In other words, the bore 20 may form a through hole. In another embodiment, the bore can be a blind hole, as depicted in Fig. 5. The bore 20 comprises a first bore segment near the foot end 18. The first bore segment is provided with an internal thread 19. The bore further comprises a second bore segment near the head end 16. The diameter of the second bore segment is greater than the diameter of the first bore segment. The wall surrounding the second bore segment forms a deformable region of the shank 14 and has an external wall diameter D1. The different diameters supporting a better deformation of the deformable region of the shank 14 on the one hand and the provision of a high-quality, load-bearing thread on the other hand.

The foot end 18 of the shank has a foot end diameter D2 which is different from D1. The ratio of the foot end diameter D2 to the external wall diameter D1 is between 0,65 and 0,82, and more particularly between 0.72 and 0.81. For example, the ratio of the foot end diameter to the external wall diameter is between 0.74 and 0.81. Finally, said ratio can be smaller 0.77.

A first internal chamfer 24 is provided between the two bore segments. The first internal chamfer 24 assists the attachment and the centering of a threaded mandrel in the bore 20 during the setting of the blind rivet nut. Blind rivet nut setting tools with threaded mandrels are well known and will not be further described. The angle of the first internal chamfer 24 to the longitudinal axis X is in the range from 55° to 65°, ideally 60°.

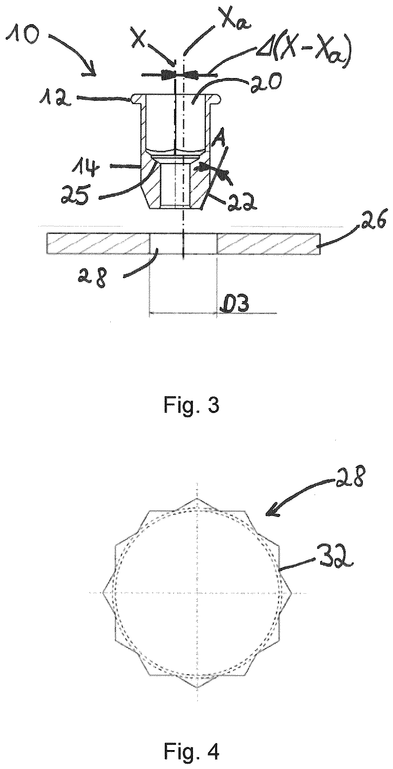

Fig. 3 shows a sectional view of the blind rivet nut 10 for the insertion in a workpiece 26. Fig. 3 illustrates the blind rivet nut 10 and only one workpiece 26. However, in another embodiment (not represented), the blind rivet nut 10 could also be inserted into more than one layer of material. The blind rivet nut 10 could be inserted for example from one layer up to five layers.

For the insertion of the blind rivet nut 10 into the workpiece 26, the workpiece 26 is pre-formed with an aperture 28 with a diameter D3. The aperture 28 is centered around an aperture axis Xa. The diameter D3 of the aperture 28 comprises dimensions which are similar to the external wall diameter D1 of the blind rivet nut 10, such that the shank 14 can be inserted into the aperture, whereas the head 12 rests against the surface directly at the periphery of the aperture. Similar means that the diameter D3 of the aperture is a little bit bigger than the external wall diameter D1 so that the blind rivet nut 10 can be inserted into the aperture 28. A little big bigger means for instance from 0,1 to 0,9 mm, ideally from 0,1 to 0,6 mm bigger.

To facilitate the insertion of the blind rivet nut 10 into the aperture 28, the foot end 18 of the blind rivet nut body is usually provided with a chamfer 22. The chamfer 22 thus facilitates the insertion of the blind rivet nut 10 within the aperture 28. The foot end 18 of the shank comprises the tapered chamfer 22 making the foot end angle A. The foot angle A is between 21° and 25° with the longitudinal axis X. For instance, the foot end angle A is of about 23°.

The setting of the blind rivet nut 10 is preferably done with a blind rivet nut setting device (not illustrated). The blind rivet nut setting device is preferably arranged on a robot or robot arm and is also driven by the robot or robot arm.

A second internal chamfer 25 is provided between the two bore segments of the bore 20. This second internal chamfer 25 assists the centering and the engaging of the threaded mandrel of the blind rivet setting device with the internal thread 19. The second internal chamfer 25 is arranged between the first internal chamfer 24 and the foot end 18, respectively the inner thread 19.

The ratio of the foot end diameter D2 to the external wall diameter D1, the foot end angle A of the blind rivet nut 10 eases a fully automated blind rivet setting method driven by a robot, notably without the necessity of a precise hole-finding device or a precise tolerance adjustment fixed on the head of a setting tool. The two internal chamfers 24, 25 may further improve the automated setting.

The aforementioned ratio makes an offset Δ(X-Xa) up to 1,5mm between the longitudinal axis X and the aperture axis Xa possible. Thus, a possible occurring offset Δ(X-Xa) up to 1,5mm does not prevent the insertion of the blind rivet nut 10 into the aperture 28.

A possible contour 32 for the aperture 28 in the workpiece 26 is shown in Fig. 4. However, in other embodiments, the aperture can be a circular aperture. For instance, the aperture 28 may have a round, epileptic or oval shape.

The workpiece 26 is prepared with the aperture 28 before the insertion of the blind rivet nut 10 and/or the blind rivet nut setting method is done. As shown in Fig. 4 the aperture 28 is provided with a contour. The provided contour consists of protrusions 32 which are extending to the aperture axis Xa. Preferably the contour comprises ten to fourteen of said protrusions 32., For example, the aperture 28 is provided with a contour having 12 protrusions 32. In a top view the contour can be seen as star-shaped. More particularly, the shape of the contour could be compared to the shape of a XZN screw/bolt head drive. The protrusions have the form of triangles with a first and second segment forming a tip, the tip extending towards the aperture axis Xa. The geometry or shape of the aperture 28 in the workpiece is also able to facilitate the fully automated blind rivet setting method driven by a robot.

It could also be possible that the protrusions have rounded tips. The tips may have a radius from 0,1 to 0,9.

This geometry of the aperture 28 has the advantage that there is more room left and right in the vicinity of a tip where the material can flow into during setting. This will prevent that the aperture becomes smaller and so, the nut is prevented from jamming during the insertion step.

The blind rivet nut arrangement with the blind rivet nut 10 and a workpiece is shown in figure 5.

The blind rivet nut arrangement comprises the blind rivet nut 10 and the workpiece 26 provided with the aperture 28. The shank 14 of the blind rivet nut 10 extends in the aperture 28, the head 12 contacts the workpiece 26 and a portion of the second bore segment is deformed forming a bulge 30. The workpiece 26 is sandwiched between the bulge 30 and the head 12.

The installation of the blind rivet nut begins with the blind rivet nut being threaded onto a threaded mandrel of a setting tool. The blind rivet nut is inserted into the aperture(s) of one or more layers of sheets of materials, for instance by a robot arm. On initiation of the setting cycle the setting tool mandrel, still in engagement in the blind rivet nut, is pulled rearwards towards the flange of the blind rivet nut thereby causing deformation of the blind rivet nut body wall (second bore segment) beyond the side of the workpiece remote from the operator and sandwiching the, or each sheet of material, against the face of the flange.

Figure 6 is a schematic flow chart of the inventive blind rivet nut setting method. The blind rivet nut setting method comprising a first step (step A) of providing a workpiece 26 with an aperture 28, wherein the aperture 28 is centered around an aperture axis Xa and comprises an aperture diameter D3. A blind rivet nut setting device is further provided with a blind rivet nut 10, wherein the blind rivet nut setting device is driven by a robot arm.

In a second step (step B) the blind rivet nut setting device is moved. The robot arm arranges the blind rivet nut 10 in front of the aperture 28. The longitudinal axis X and the aperture axis Xa are or can be offset up to 1,5mm.

In a third step (step C) the shank 14 is inserted in the aperture 28. An offset between the longitudinal axis X and the aperture axis Xa up to 1,5mm does not prevent the insertion of the present blind rivet nut 10 into the aperture 28.

In a last step (step E) the blind rivet nut 10 is set in the aperture.

It is additionally possible to perform a straightening step (step D) after the insertion of the shank 14, such that the longitudinal axis X extends perpendicular to the workpiece surface during the setting. More particularly, the straightening step consists of centering the head of the blind rivet nut setting tool with the center of the aperture after or during insertion of the blind rivet nut. The head of the blind rivet nut setting device is "straightened" to align the axis and perform the well-known Pull step for setting the blind rivet nut.

The blind rivet nut setting method can thus be done fully automatically and without any previously required hole-finding devices like sensors or video camera.

### Reference sign list

- 10: blind rivet nut
- 12: blind rivet nut head with a flange
- 14: shank
- 16: head end
- 18: foot end
- 19: inner thread
- 20: bore
- 22: tapered chamfer
- 24: first internal chamfer
- 25: second internal chamfer
- 26: workpiece
- 28: aperture
- 30: bulge
- 32: protrusions

- A: foot end angle
- L: length of the shank
- X: longitudinal axis (of the blind rivet nut)
- Xa: aperture axis
- (Δ(X-Xa)): offset
- D1: external wall diameter
- D2: foot end diameter
- D3: diameter of the aperture

## Claims

1. Blind rivet nut (10) for insertion into an aperture formed in one or more layers of material comprising:
- a head (12) forming a flange;
- a shank (14) comprising a head end (16), a foot end (18) and a cylindrical bore (20) extending along a longitudinal axis (X) from the head end (16) to the foot end (18), the bore having a first bore segment near the foot end (18), provided with an internal thread (19) and a second bore segment near the head end (16) whose diameter is greater than the diameter of the first bore segment, the wall surrounding the second bore segment forming a deformable region of the shank and having an external wall diameter (D1), the foot end (18) having a foot end diameter (D2),
**characterized in that** the foot end (18) of the shank comprises a tapered chamfer (22) making a foot end angle (A) of 21 to 25 degrees with the longitudinal axis (X), and wherein the ratio of the foot end diameter (D2) to the external wall diameter (D1) is between 0.65 and 0.82.

2. Blind rivet nut (10) according to claim 1, wherein the ratio of the foot end diameter (D2) to the external wall diameter (D1) is between 0.74 and 0.81.

3. Blind rivet nut (10) according to claim 1 or 2, wherein the foot end angle (A) is of about 23 degrees.

4. Blind rivet nut (10) according to any of the preceding claims, wherein a first internal chamfer (24) is provided between the first bore segment and the second bore segment, and wherein the first internal chamfer (24) makes an angle of about 60 degrees with the longitudinal axis (X).

5. Blind rivet nut (10) according to claim 4, wherein a second internal chamfer (25) is provided between the first bore segment and the second bore segment.

6. Blind rivet nut (10) according to any of claims 1 to 5, wherein the blind rivet nut (10) is made of a material chosen from steel, stainless steel, aluminium or brass.

7. Blind rivet nut (10) according to any of claims 1 to 6, wherein the shank (14) has an outer surface in the form of a regular polygonal prism or of a cylinder.

8. Blind rivet nut arrangement comprising a blind rivet nut (10) according to any of claims 1 to 7 and a workpiece (26) provided with an aperture (28), wherein the shank (14) of the blind rivet nut (10) extends in the aperture (28), the head (12) contacts the workpiece (26) and a portion of the second bore segment is deformed forming a bulge (30), such that the workpiece is sandwiched between the bulge (28) and the head (12).

9. Blind rivet nut arrangement according to claim 8, wherein the aperture (28) is provided with a contour having 12 protrusions (32).

10. Blind rivet nut setting method comprising the step of
a. Providing a workpiece (26) with an aperture (28), wherein the aperture (28) is centered around an aperture axis (Xa) and comprises an aperture diameter (D3);
b. Providing a blind rivet nut setting device and a blind rivet nut (10) according to any of claims 1 to 7, wherein the blind rivet nut setting device is driven by a robot arm, and wherein the external wall diameter (D1) is sensibly equal to the aperture diameter (D3);
c. Moving the blind rivet nut setting device and the blind rivet nut (10) with the robot arm such that the blind rivet nut (10) is facing the aperture (28) with the longitudinal axis (X) and the aperture axis (Xa) being offset up to 1,5mm;
d. Inserting the shank (14) in the aperture (28), wherein an offset between the longitudinal axis (X) and the aperture axis (Xa) does not prevent the insertion of the blind rivet nut (10) into the aperture (28);
e. Setting the blind rivet nut (10) in the aperture.

11. Method according to claim 10, wherein a straightening step is performed after the insertion of the shank (14), such that the longitudinal axis (X) extends perpendicular to the workpiece surface during the setting.

12. Method according to claim 10 or 11, wherein the aperture (28) is provided with a contour having 12 protrusions.

## Patentansprüche

1. Blindnietmutter (10) zum Einsetzen in eine Öffnung, die in einer oder mehreren Materialschichten gebildet ist, umfassend:
- einen Kopf (12), der einen Flansch bildet;
- einen Schenkel (14), der ein Kopfende (16), ein Fußende (18) und eine zylinderförmige Bohrung (20), die sich entlang einer Längsachse (X) von dem Kopfende (16) zu dem Fußende (18) erstreckt, umfasst, wobei die Bohrung ein erstes Bohrungssegment in der Nähe des Fußendes (18), das mit einem Innengewinde (19) bereitgestellt ist, und ein zweites Bohrungssegment in der Nähe des Kopfendes (16), dessen Durchmesser größer ist als der Durchmesser des ersten Bohrungssegments, aufweist, wobei die das zweite Bohrungssegment umgebende Wand eine verformbare Region des Schenkels bildet und einen Wandaußendurchmesser (D1) aufweist, wobei das Fußende (18) einen Fußendendurchmesser (D2) aufweist,
**dadurch gekennzeichnet, dass** das Fußende (18) des Schenkels eine verjüngte Schrägkante (22) umfasst, die einen Fußendenwinkel (A) von 21 bis 25 Grad mit der Längsachse (X) herstellt, und wobei das Verhältnis des Fußendendurchmessers (D2) zu dem Wandaußendurchmesser (D1) zwischen 0,65 und 0,82 beträgt.

2. Blindnietmutter (10) nach Anspruch 1, wobei das Verhältnis des Fußendendurchmessers (D2) zu dem Wandaußendurchmesser (D1) zwischen 0,74 und 0,81 beträgt.

3. Blindnietmutter (10) nach Anspruch 1 oder 2, wobei der Fußendenwinkel (A) ungefähr 23 Grad beträgt.

4. Blindnietmutter (10) nach einem der vorstehenden Ansprüche, wobei zwischen dem ersten Bohrungssegment und dem zweiten Bohrungssegment eine erste interne Schrägkante (24) bereitgestellt ist, und wobei die erste interne Schrägkante (24) einen Winkel von ungefähr 60 Grad mit der Längsachse (X) herstellt.

5. Blindnietmutter (10) nach Anspruch 4, wobei zwischen dem ersten Bohrungssegment und dem zweiten Bohrungssegment eine zweite interne Schrägkante (25) bereitgestellt ist.

6. Blindnietmutter (10) nach einem der Ansprüche 1 bis 5, wobei die Blindnietmutter (10) aus einem Material hergestellt ist, das ausgewählt ist aus Stahl, Edelstahl, Aluminium oder Messing.

7. Blindnietmutter (10) nach einem der Ansprüche 1 bis 6, wobei der Schenkel (14) eine äußere Oberfläche in der Form eines regelmäßigen Polygonprismas oder eines Zylinders aufweist.

8. Blindnietmutteranordnung, umfassend eine Blindnietmutter (10) nach einem der Ansprüche 1 bis 7 und ein Werkstück (26), das mit einer Öffnung (28) bereitgestellt ist, wobei sich der Schenkel (14) der Blindnietmutter (10) in die Öffnung (28) erstreckt, der Kopf (12) mit dem Werkstück (26) in Berührung ist und ein Abschnitt des zweiten Bohrungssegments verformt wird und eine Bauchung (30) bildet, so dass das Werkstück zwischen der Bauchung (28) und dem Kopf (12) zwischengelagert ist.

9. Blindnietmutteranordnung nach Anspruch 8, wobei die Öffnung (28) mit einer Umrisslinie bereitgestellt ist, die 12 Vorsprünge (32) aufweist.

10. Verfahren zum Blindnietmuttersetzen, umfassend die Schritte
a) Bereitstellen eines Werkstücks (26) mit einer Öffnung (28), wobei die Öffnung (28) um eine Öffnungsachse (Xa) zentriert ist und einen Öffnungsdurchmesser (D3) umfasst;
b) Bereitstellen einer Vorrichtung zum Blindnietmuttersetzen und einer Blindnietmutter (10) nach einem der Ansprüche 1 bis 7, wobei die Vorrichtung zum Blindnietmuttersetzen von einem Roboterarm angetrieben wird, und wobei der Wandaußendurchmesser (D1) zweckmäßig gleich groß ist wie der Öffnungsdurchmesser (D3);
c) Bewegen der Vorrichtung zum Blindnietmuttersetzen und der Blindnietmutter (10) mit dem Roboterarm so, dass die Blindnietmutter (10) zu der Öffnung (28) zeigt, wobei die Längsachse (X) und die Öffnungsachse (Xa) um bis zu 1,5 mm versetzt sind;
d) Einsetzen des Schenkels (14) in die Öffnung (28), wobei ein Versatz zwischen der Längsachse (X) und der Öffnungsachse (Xa) Einsetzen der Blindnietmutter (10) in die Öffnung (28) nicht verhindert;
e) Setzen der Blindnietmutter (10) in die Öffnung.

11. Verfahren nach Anspruch 10, wobei nach dem Einsetzen des Schenkels (14) ein Schritt der Begradigung ausgeführt wird, so dass sich während des Setzens die Längsachse (X) rechtwinkelig zu der Werkstückoberfläche erstreckt.

12. Verfahren Anspruch 10 oder 11, wobei die Öffnung (28) mit einer Umrisslinie bereitgestellt ist, die 12 Vorsprünge aufweist.

## Revendications

1. Ecrou à rivet aveugle (10) pour l'insertion dans une ouverture formée dans une ou plusieurs couches de matériau comprenant :
- une tête (12) formant une bride ;
- une tige (14) comprenant une extrémité de tête (16), une extrémité de pied (18) et un trou cylindrique (20) s'étendant le long d'un axe longitudinal (X) depuis l'extrémité de tête (16) à l'extrémité de pied (18), le trou présentant un premier segment de trou près de l'extrémité de pied (18), étant doté d'un filet interne (19) et un second segment de trou près de l'extrémité de tête (16), dont le diamètre est supérieur au diamètre du premier segment de trou, la paroi entourant le second segment de trou formant une région déformable de la tige et présentant un diamètre de paroi externe (D1), l'extrémité de pied (18) présentant un diamètre d'extrémité de pied (D2),
**caractérisé en ce que** l'extrémité de pied (18) de la tige comprend un chanfrein effilé (22) faisant un angle d'extrémité de pied (A) de 21 à 25 degrés avec l'axe longitudinal (X), et dans lequel le rapport du diamètre d'extrémité de pied (D2) au diamètre de paroi externe (D1) est compris entre 0,65 et 0,82.

2. Ecrou à rivet aveugle (10) selon la revendication 1, dans lequel le rapport du diamètre d'extrémité de pied (D2) au diamètre de paroi externe (D1) est compris entre 0,74 et 0,81.

3. Ecrou à rivet aveugle (10) selon la revendication 1 ou 2, dans lequel l'angle d'extrémité de pied (A) est d'environ 23 degrés.

4. Ecrou à rivet aveugle (10) selon l'une quelconque des revendications précédentes, dans lequel un premier chanfrein interne (24) est prévu entre le premier segment de trou et le second segment de trou, et dans lequel le premier chanfrein interne (24) fait un angle d'environ 60 degrés avec l'axe longitudinal (X).

5. Ecrou à rivet aveugle (10) selon la revendication 4, dans lequel un second chanfrein interne (25) est prévu entre le premier segment de trou et le second segment de trou.

6. Ecrou à rivet aveugle (10) selon l'une quelconque des revendications 1 à 5, dans lequel l'écrou de rivet aveugle (10) est réalisé en un matériau choisi parmi l'acier, l'acier inoxydable, l'aluminium ou le laiton.

7. Ecrou à rivet aveugle (10) selon l'une quelconque des revendications 1 à 6, dans lequel la tige (14) présente une surface extérieure sous la forme d'un prisme polygonal régulier ou d'un cylindre.

8. Agencement d'écrou à rivet aveugle comprenant un écrou à rivet aveugle (10) selon l'une quelconque des revendications 1 à 7 et une pièce de travail (26) dotée d'une ouverture (28), dans lequel la tige (14) de l'écrou à rivet aveugle (10) s'étend dans l'ouverture (28), la tête (12) touche la pièce de travail (26) et une portion du second segment de trou est déformée formant un renflement (30) de sorte que la pièce de travail soit prise en sandwich entre le renflement (28) et la tête (12).

9. Agencement d'écrou à rivet aveugle selon la revendication 8, dans lequel l'ouverture (28) est dotée d'un contour présentant 12 saillies (32).

10. Procédé de réglage d'écrou à rivet aveugle comprenant l'étape de
a) fourniture d'une pièce de travail (26) avec une ouverture (28), dans lequel l'ouverture (28) est centrée autour d'un axe d'ouverture (Xa) et comprend un diamètre d'ouverture (D3) ;
b) fourniture d'un dispositif de réglage d'écrou à rivet aveugle et d'un écrou à rivet aveugle (10) selon l'une quelconque des revendications 1 à 7, dans lequel le dispositif de réglage d'écrou à rivet aveugle est entraîné par un bras de robot, et dans lequel le diamètre de paroi externe (D1) est sensiblement égal au diamètre d'ouverture (D3) ;
c) déplacement du dispositif de réglage d'écrou à rivet aveugle et de l'écrou à rivet aveugle (10) avec le bras de robot de sorte que l'écrou à rivet aveugle (10) fasse face à l'ouverture (28), l'axe longitudinal (X) et l'axe d'ouverture (Xa) étant en déport jusqu'à 1,5 mm ;
d) insertion de la tige (14) dans l'ouverture (28), dans lequel un déport entre l'axe longitudinal (X) et l'axe d'ouverture (Xa) n'empêche pas l'insertion de l'écrou à rivet aveugle (10) dans l'ouverture (28) ;
e) réglage de l'écrou à rivet aveugle (10) dans l'ouverture.

11. Procédé selon la revendication 10, dans lequel une étape de raidissement est réalisée après l'insertion de la tige (14), de sorte que l'axe longitudinal (X) s'étende perpendiculairement à la surface de pièce de travail pendant le réglage.

12. Procédé selon la revendication 10 ou 11, dans lequel l'ouverture (28) est dotée d'un contour présentant 12 saillies.
